# EUROPEAN PATENT SPECIFICATION

(11) **EP 3 693 217 B1**
(45) Date of publication and mention of the grant of the patent: **04.08.2021**
(21) Application number: 20156226.1
(22) Date of filing: 07.02.2020
(51) Int. Cl.: B60Q 1/076, F16H 25/20

(54) **LINEAR MOTION TRANSMISSION DEVICE BETWEEN A FIRST AND A SECOND COMPONENT WITH A FORCE LIMITER FUNCTION, IN PARTICULAR APPLICABLE TO A LIGHTING DEVICE FOR VEHICLES**
ÜBERTRAGUNGSVORRICHTUNG ZUR LINEARBEWEGUNG ZWISCHEN EINER ERSTEN UND EINER ZWEITEN KOMPONENTE MIT EINER KRAFTBEGRENZUNGSFUNKTION, INSBESONDERE ANWENDBAR AUF EINE BELEUCHTUNGSVORRICHTUNG FÜR FAHRZEUGE
DISPOSITIF DE TRANSMISSION DE MOUVEMENT LINÉAIRE ENTRE UN PREMIER ET UN SECOND COMPOSANT DOTÉ D'UNE FONCTION DE LIMITEUR DE FORCE, EN PARTICULIER APPLICABLE À UN DISPOSITIF D'ÉCLAIRAGE POUR VÉHICULES

(30) Priority: 07.02.2019 IT 201900001797
(43) Date of publication of application: 12.08.2020
(73) Proprietor: Marelli Automotive Lighting Italy S.p.A. Con Socio Unico, 10078 Venaria Reale (TO) (IT)
(72) Inventor: FALESSI, Alessandro, 10078 VENARIA REALE (TO) (IT)
(74) Representative: Plebani, Rinaldo

(56) References cited:
- EP-A1- 2 112 021
- EP-A1- 2 918 447
- WO-A1-2005/050062
- US-A- 4 237 529

## Description

### Technical background of the invention

The present invention relates to a motion transmission device between a first and a second component with a force limiter function, in particular applicable to a lighting device for vehicles, where the first component is an electric motor and the second component is a reflector or lighting element of the lighting device, which must be moved, for example to direct a light beam generated by the lighting device while going round a bend and/or to adjust the direction of the light beam according to the load (passengers/baggage) weighing on the vehicle.

### Prior Art

As known, a vehicle lighting device comprises a cup-shaped body or housing, generally made by moulding a synthetic plastic material, at least one lighting element housed in the cup-shaped body, fitted with a reflector or not, and a transparent element placed to close a front opening of the cup-shaped body, in use facing the direction of travel of the vehicle.

In order to prevent the accidental glare of other vehicles, it must be possible to adjust the vertical output direction of the light beam generated by the lighting device in relation to the respective weight of the vehicle, in particular in the presence of luggage and/or passengers in the rear seat. For this purpose, an electro-mechanical device is used which moves the reflector or lighting element appropriately (at the user's or sensor's command) and which consists of an electric motor or linear actuator which acts on the reflector or lighting element via a mechanical transmission device.

However, particularly after repeated and frequent use, the mechanical transmission device may accidentally jam, causing an overload of the electric motor or actuator, and consequent premature wear or damage to the same.

This problem is all the more present in adaptive lighting devices, where the reflector or lighting element is, for example, rotated routinely, for example to direct the light beam according to the curves performed by the vehicle.

Lastly, it should be noted that there are also projectors without an external lens, in which the adjustment mechanism could be stressed not only by accidental jamming thereof but also by external events such as vandalism or in any other case of excessive force applied to the lighting elements.

A transmission device according to the preamble of claim 1 is known from US 4 237 529 A.

### Summary of the invention

The purpose of the present invention is to provide a motion transmission device between a first and a second component, in particular applicable to a lighting device for vehicles, which is free of the drawbacks of the prior art, in particular having a force limiter function, and which is also simple and economical to make, highly reliable and small in size.

According to the invention, a motion transmission device between a first and a second component with a force limiter function, in particular applicable to a lighting device for vehicles, is therefore provided, as defined in the appended claims.

In particular, the motion transmission device according to the invention comprises a support for fixedly receiving the first component, an output shaft of the first component, axially mobile with respect to the support, a first shaft configured to be constrained in use to the second component, and a mechanical connection device between the axially mobile output shaft and the first shaft.

According to the invention, the mechanical connection device comprises in turn: a cup-shaped body fixed to the first shaft and slidably coupled to the support parallel to the output shaft and coaxially thereto by means of at least one pair of lateral guides fixed to the support; a bushing, mounted inside the cup-shaped body, which is coaxial and slidable with respect thereto, the bushing being axially constrained in a fixed way to the output shaft so as to move integrally therewith; at least one pair of radial holes, made in a radially inner lateral surface of the cup-shaped body, said lateral surface cooperating with the bushing; at least one pair of opposed pegs, housed so that they can slide within respective radial seats of the bushing, which are provided within said bushing and until they pass through a radially outer lateral wall of the bushing, the radial seats further housing first springs which cooperate with the pegs, the first springs and the radial seats being configured to cause the pegs to selectively assume an extracted position, in which a first end of the pegs radially projects in a cantilever fashion from the bushing to engage the radial holes of the cup-shaped body and fix the cup-shaped body to the bushing, and a retracted position, in which the first end of the pegs is at least partially housed in a concealed fashion in the radial seats against the action of the first springs so as not to engage the radial holes of the cup-shaped body; and second springs, packed between the support and the cup-shaped body and between the support and respective shoulder elements, which are fixed with respect to the cup-shaped body and are arranged, with respect to the support, on the side opposite the cup-shaped body.

Furthermore, the first ends of the pegs are delimited by respective surfaces, arranged obliquely with respect to an axis of symmetry of the output shaft and of the bushing and configured to cooperate with a perimetral edge of the radial holes so as to push the pegs towards the retracted position, against the action of the first springs, as a result of any axial load applied in use to the first shaft that exceeds a threshold value.

In this way, when an axial stress greater than a threshold value chosen in the design phase is applied to the first shaft, the pegs are brought by the radial component of the axial stress, resulting from the presence of the oblique surfaces of the ends of the pegs, into the retracted position.

In this retracted position of the pegs, the bushing is no longer axially constrained to the cup-shaped body and is therefore free to move axially with respect to the same, as is the support, to which it is connected by means of the output shaft, against the action of the second springs.

As a result, the output shaft, even if it continues to move under the action of the first component, which is generally an electric motor or actuator, never receives axial stress higher than the established threshold value, preserving the first component.

The established threshold value is determined in the design phase by appropriately sizing the first and second springs and the angle of inclination of the oblique surfaces with respect to the axis of movement of the output shaft.

According to a preferred embodiment of the invention, the mechanical connection device further comprises a second shaft configured to fixedly couple, on one side, to the output shaft of the first component and, on the opposite side, to the bushing; in addition, the second shaft connects to the bushing by means of a ball joint and, preferably, by snap action.

The bushing preferably comprises an annular or cup-shaped drum, preferably cylindrical, which has a first end facing the first shaft and provided with the radial seats for the pegs and for the first springs; a cover for closing a second end of the drum, which is opposite to the first end and is open towards the support, the cover being provided with a hole for receiving the output shaft through it as far as into the drum; and a spherical joint, which fixedly receives the output shaft and cooperates in contact with a first inner lateral surface of the drum, the spherical joint being axially blocked inside the drum by the cover.

Finally, to facilitate the assembly of the transmission device, the cup-shaped body is divided into two elements consisting of an annular element coupled frontally to a cup-shaped element and integrally connected to each other by means of detachable connection members, preferably screws; the cup-shaped element being provided with the radial holes and both the annular and cup-shaped elements being coaxial and configured to slidingly receive inside them the bushing.

### Brief description of the drawings

Further characteristics and advantages of the present invention will be more evident from the following description of a non-limiting embodiment thereof, provided merely by way of example and with reference to the figures in the appended drawings, wherein:
- Figure 1 shows schematically a longitudinal view in elevation of a motion transmission device between a first and a second component with a force limiter function, made according to the invention and applied to a vehicle lighting device, illustrated only partially and schematically, and partially in longitudinal cross-section;
- Figure 2 schematically shows a three-quarter forward perspective view of the motion transmission device with force limiter function in Figure 1;
- Figure 3 shows, on a magnified scale, an elevation and longitudinal section view of the motion transmission device with force limiter function shown in Figure 2;

- Figure 4 illustrates, in a further enlarged scale and schematically, a detail of Figure 3;
- Figure 5 shows an exploded and three-quarter forward perspective view of the motion transmission device with force limiter function according to the invention; and
- Figures 6 and 7 show the same cross-section view of Figure 3 in two different working positions of the motion transmission device with force limiter function according to the invention.

### Detailed description

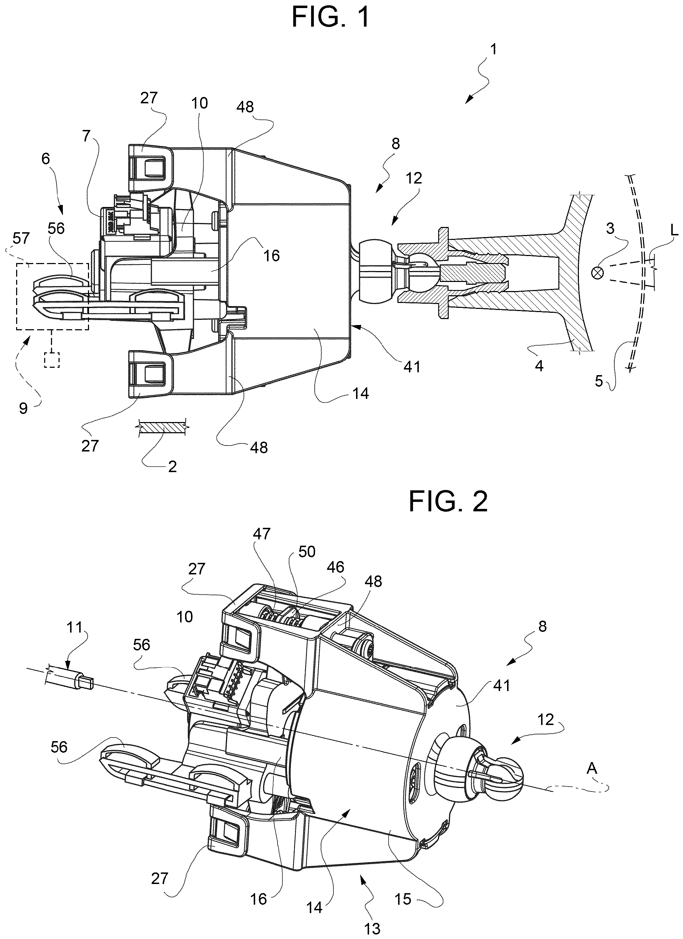

With reference to Figure 1, reference numeral 1 globally denotes a front headlamp for motor vehicles, configured to be fixed in a known manner, not illustrated for the sake of simplicity, to the chassis of a vehicle (also known and not illustrated).

The lighting device 1 comprises a housing 2, generally cup-shaped, a light source 3, a reflector 4 and a lens 5, either clear (i.e. not altering a light beam L produced by the light source 3) or optically active, which closes the housing 2 at the front.

In order to direct the light beam L, simply to compensate for changes in the payload (passengers and/or luggage) of the vehicle (trim adjustment) or/and for example, to make the light beam L follow the bends made by the vehicle (adaptive lighting function), the reflector 4 or, if absent, directly the light source 3, can be rotated vertically and/or horizontally by means of an adjustment device 6, known in its general structure, comprising an electric motor or actuator 7, a linear motion transmission device 8 from the motor/actuator 7 to the reflector 4 (or directly to the light source 3) and a manual trim adjuster 9, known and illustrated only schematically by dotted lines by a block, for simplicity.

More generally, the motion transmission device 8 is used to transmit a linear motion between a first component (in the example shown, consisting of the motor/actuator 7) and a second component, the orientation/trim of which must be varied, in the example shown, consisting of the reflector 4, but more generally also consisting of light source 3 alone.

According to the invention, the transmission device 8 is designed with a force limiter function to protect the first component or motor/actuator 7 from any overloads that could damage it.

For this purpose, the transmission device 8 (Figure 2) comprises a support 10 for fixedly receiving the first component 7, an output shaft 11 of the first component, such output shaft 11 being axially mobile with respect to the support 10, a first shaft 12, configured to be constrained in use to the second component 4 (or 3), and a mechanical connection device 13 between the axially mobile output shaft 11 and the first shaft 12.

According to the invention, the mechanical connection device 13 comprises a cup-shaped body 14, in the example shown, delimited by a cylindrical side wall 15 and coupled relatively slidingly to the support 10, parallel to the output shaft 11 and coaxially thereto, by means of at least a pair of lateral guides 16 attached to the support 10 and from which they protrude axially in a cantilever manner towards the cup-shaped body 14 which, according to one aspect of the invention, is fixed to the first shaft 12.

The mechanical connection device 13 further comprises a bushing 18 mounted inside the cup-shaped body 14, arranged coaxial to the cup-shaped body 14 and housed relatively slidingly with respect thereto, said bushing 18 being axially integral, in any known manner, to the output shaft 11, so as to move integrally therewith.

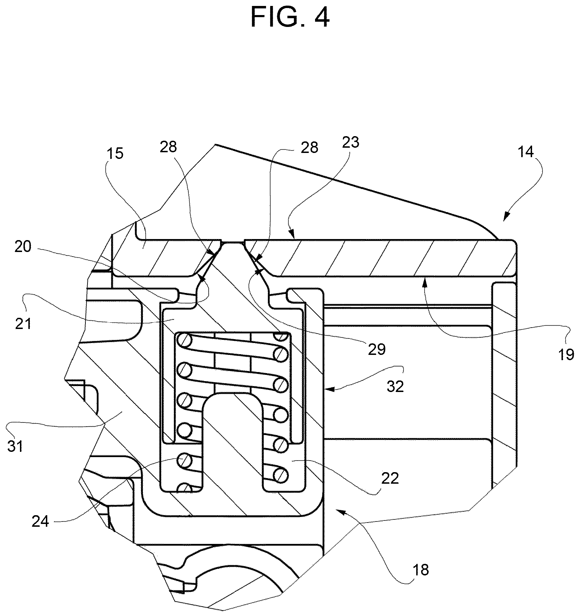

The side wall 15 of the cup-shaped body 14 is provided at one of its radially internal lateral surfaces 19 (Figure 4), with at least one pair of opposite radial holes 20 (which in the example shown are through holes, but which may also be blind), said radial holes 20 being preferably conical in shape.

The lateral surface 19 also cooperates with the bushing 18, in the example shown in contact therewith, and is preferably cylindrically symmetrical.

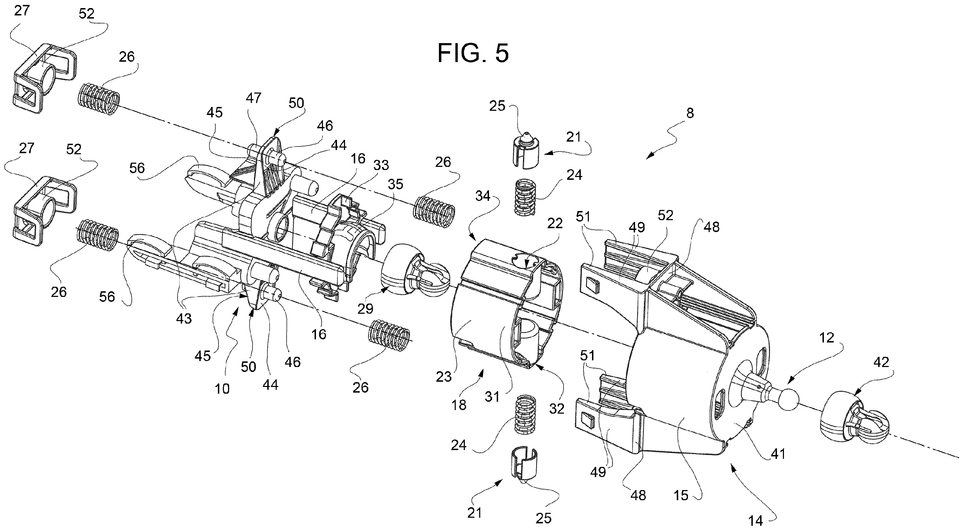

The mechanical connection device 13 further comprises at least one pair of opposite pegs 21 housed so as to slide in respective radial seats 22 of the bushing 18 (Figures 4 and 5) made therein as far as through a radially external lateral wall 23 of the bushing 18.

The radial seats 22 also house first springs 24 cooperating with the pegs 21.

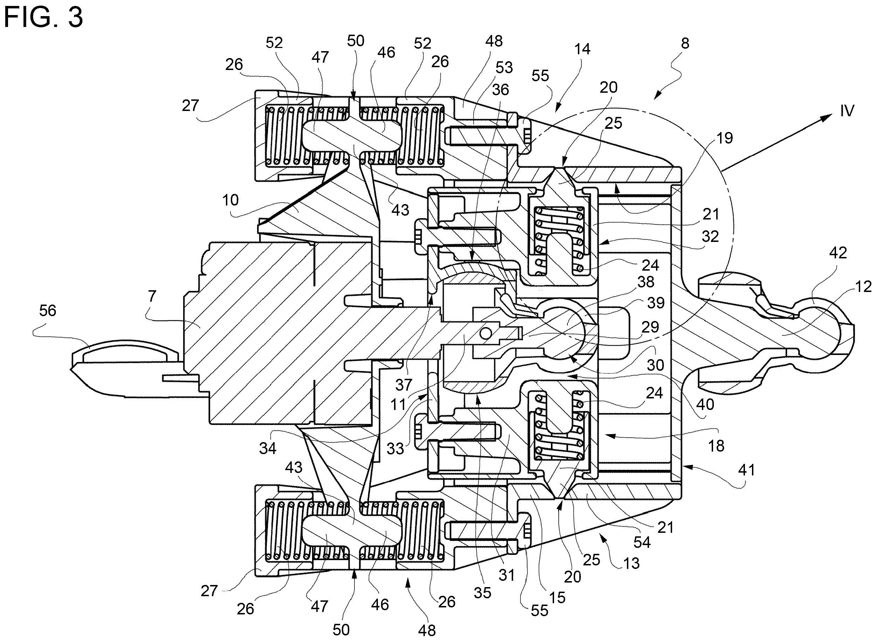

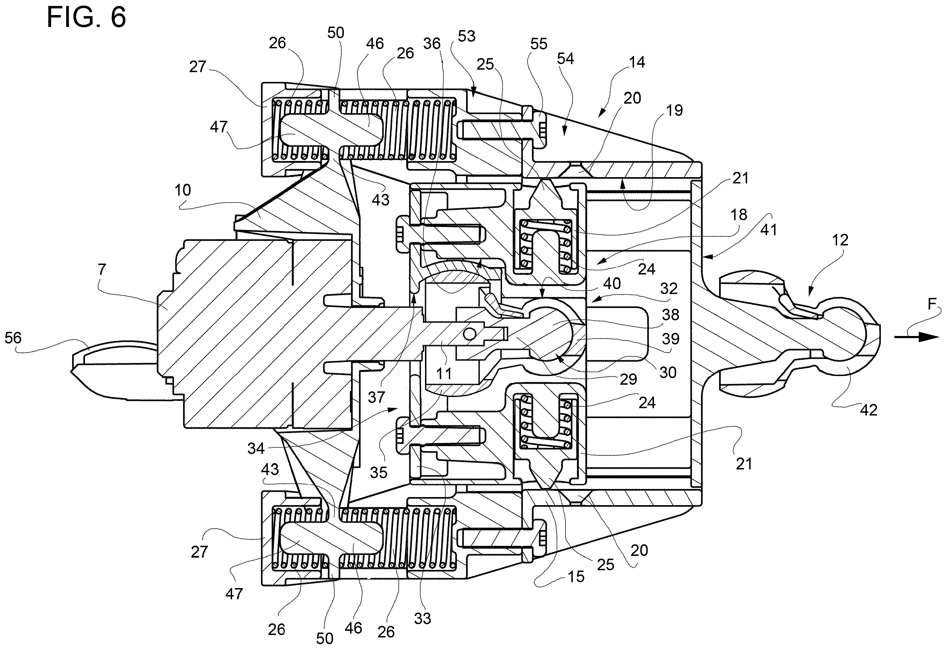

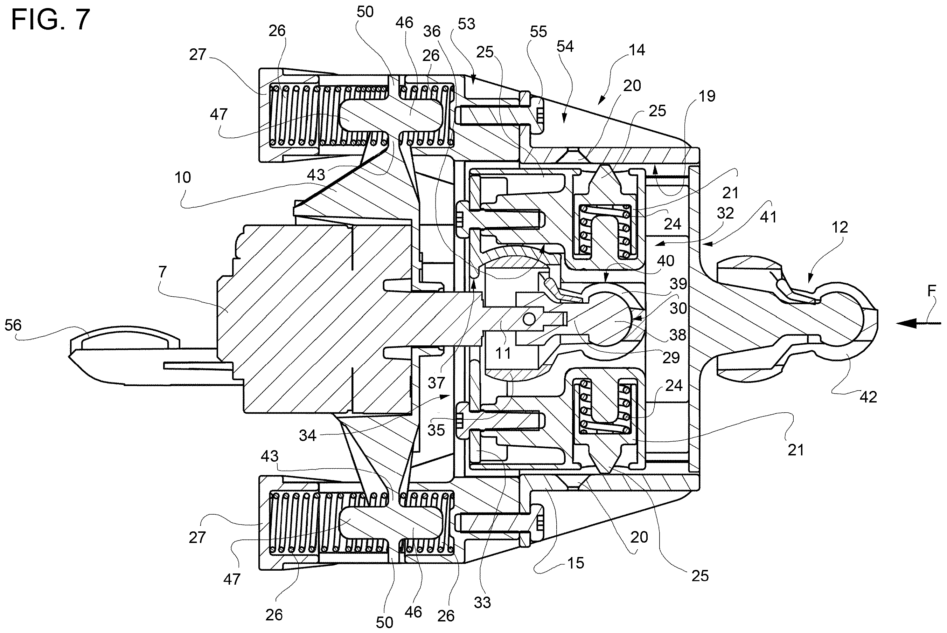

The springs 24 and the radial seats 22 are configured to make the pegs 21 selectively assume an extracted position (Figure 3) and a retracted position (Figures 6 and 7).

In the extracted position of the pegs 21, a first end 25 of the pegs 21 protrudes radially cantilevered from the bushing 18 to engage the radial holes 20 of the cup-shaped body 14 and thus fix the cup-shaped body 14 to the bushing 18.

In the retracted position, the first end 25 of the pegs is at least partially housed in a concealed fashion in the radial seats 20 against the action of the first springs 24 so as not to engage the radial holes 20 of the cup-shaped body 14.

In order to facilitate the introduction of the pegs 21 into the seats 22 and to prevent their accidental release, the pegs 21 (Figure 5) and seats 20 have bayonet couplings.

The mechanical connection device 13 lastly comprises second springs 26, packed between the support 10 and the cup-shaped body 14 and between the support 10 and respective shoulder elements 27 (Figure 5), which are fixed to the cup-shaped body 14 and are arranged, with respect to the support 10, on the side opposite to the cup-shaped body 14.

According to another important aspect of the invention, the first ends 25 of the pegs 21 are delimited by respective surfaces 28 (Figure 4) arranged obliquely with respect to an axis of symmetry A of the output shaft 11 and the bushing 18, in the non-limiting example illustrated defined by conical surfaces coaxial with the pegs 21.

The oblique (conical) surfaces 28 are configured to cooperate with a perimeter edge 29 (Figure 4), also conical in the non-limiting example shown, of the radial holes 20 to push the pegs 21 towards the retracted position, against the action of the first springs 24, as a result of any axial stress F (Figures 6 and 7) applied in use to the first shaft 12 and exceeding a pre-set threshold value, for example calculated during the design phase, so that in the retracted position of the pegs 21 the bushing 18 is no longer axially constrained to the cup-shaped body 14 and is consequently free to move axially with respect to the cup-shaped body 14. For the same reason, the support 10 is also free to move in relation to the cup-shaped body 14 against the action of the springs 26, together (but not necessarily of the same magnitude) with the bushing 18.

The mechanical connection device 13 further comprises a second shaft 29 configured to couple integrally, on one side, with the output shaft 11 of the first component 7 and, on the other side, with the bushing 18.

According to one aspect of the invention, the shaft 29 is connected to the bushing 18 by a ball joint 30, preferably designed to allow a snap connection with the shaft 29.

According to a preferred embodiment of the invention, the bushing 18 comprises: an annular or cup-shaped drum 31, preferably cylindrical, which has a first end 32 facing the first shaft 12 and provided with radial seats 22 for the pegs 21 and the springs 24; a cover 33 for closing a second end 34 of the drum 31, opposite the end 32 and open towards the support 10; and a spherical joint 35 (Figure 5), which fixedly receives the output shaft 11 and cooperates in contact with a first inner lateral surface 36 of the drum 31.

The cover 33 is provided with a hole 37 for receiving the output shaft 11 through it as far as into the drum 31 and the spherical joint 35 is axially blocked inside the drum 31 by the cover 33.

The output shaft 11 is coupled, according to the preferred embodiment shown by way of a non-limiting example, integral with the second shaft 29, which is arranged coaxial with it and also housed inside the drum 31.

The shaft 29 in turn couples to the spherical joint 35 radially inside thereof by means of the ball joint 30, which comprises a spherical head 38 made in one piece with the shaft 29 at a first end thereof opposite the output shaft 11, and a spherical receiving element 39 for the spherical head 38, made in one piece with the spherical joint 35 and extending axially cantilevered towards the first end 32 of the drum 31, with which it couples in contact with a second inner lateral surface 40 of the drum 31 by means of an outer lateral surface thereof, of a spherical shape.

The shaft 12 is preferably made in one piece with the cup-shaped body 14, coaxially with the output shaft 11, and extends axially cantilevered from a bottom wall 41 of the cup-shaped body 14, externally thereto and on the opposite side of the bushing 18.

In addition, the shaft 12 is preferably provided at one free end with a spherical joint coupling element 42 to the second component 4 or 3 for receiving stresses from the same.

In order to allow an easy, simple and effective assembly and a reliable operation of the springs 26, the support 10 is provided radially cantilevered and radially externally with at least one pair of opposite first lugs 43, each of which is delimited (shown only in Figure 5) by a first face 44 facing the cup-shaped body 14 and by a second face 45 facing the side opposite to the cup-shaped body 14.

The faces 44, 45 are provided in an axially cantilevered manner, respectively, with a first pin 46 and a second pin 47, opposite and coaxial.

The pins 46, 47 are arranged parallel to the axis of symmetry A of the output shaft 11 and of the bushing 18 and partially supporting cantilevered springs 26, which are helical springs each fitted on a respective first or second pin 46 and 47 and coupled in contact against the first and second faces 44, 45 of the lugs 43.

The cup-shaped body 14 is provided at the first lugs 43 of the support 10 with second lugs 48 facing the lugs 43.

Respective pairs of straight longerons 49 protrude cantilevered from the lugs 48, parallel to the pins 46, 47 and towards the support 10 (Figure 5).

Between each pair of longerons 49 a respective radially outer end 50 of a lug 43 provided with a respective first pin 46 and second pin 47 is axially slidingly inserted, which are also arranged between the pair of longerons 49 together with a pair of second springs 26, each fitted on a first or second pin 46 and 47, respectively.

The shoulder elements 27 preferably consist of plates, each snap-coupled to respective free ends 51 of a pair of longerons 50 (Figure 5).

The plates 27 and the lugs 48 are preferably provided one towards the other with cantilevered sleeves 52 coaxial with the pins 46, 47 inside which the respective ends of the springs 26 opposite the first lugs 43 are inserted.

The sleeves 52 are also configured to cooperate with the radially outer ends 50 of the lugs 43 to serve as axial end stop elements for the support 10 when the pegs 21 are in the retracted position.

Preferably, to facilitate assembly, the cup-shaped body 14 is made up of two elements consisting of an annular element 53 coupled frontally to a cup-shaped element 54 and connected integrally together by means of detachable connection members, preferably screws 55.

The cup-shaped element 54 is the one with the radial holes 20 and both the annular element 53 and cup-shaped element 54 are coaxial to each other and configured to slidingly receive the bushing 18 inside them.

From the description above it is clear that the transmission device 13 is specifically configured to be housed inside a vehicle lighting device 1 to connect an electric motor or actuator 7 with a reflector 4 or light source 3, to vary its orientation.

For this purpose, the support 10 is also provided, on the side opposite the lateral guides 16, with a pair of lateral pads 56, configured to support the entire transmission device 13 inside the lighting device 1 and specifically to couple with elements 57, illustrated merely schematically and by dashed lines in Figure 1, of the manual trim adjuster 9.

The invention therefore lastly also relates to a vehicle comprising a lighting device 1, headlamp or rear light provided with a transmission device 13 as described, for connecting together an electric motor or actuator 7 with a reflector 4 or light source 3 in order to vary the orientation thereof.

Owing to the transmission device 13 as described, it is clear that the lighting device equipped with it is protected from damage not only in the case of jamming of the lighting element, but also in the case of projectors without an external lens as a result of vandalism or in any other case of excessive force applied to the lighting elements.

Consequently, all the purposes of the invention are achieved.

## Claims

1. A motion transmission device (8) for transmitting a linear motion between a first (7) and a second (4) component with a force limiter function, in particular applicable to a lighting device (1) for vehicles, comprising a support (10) for fixedly receiving the first component, an output shaft (11) of the first component, axially mobile with respect to the support, a first shaft (12), configured to be constrained in use to the second component, and a mechanical connection device (13) between the axially mobile output shaft and the first shaft; **characterized in that** the mechanical connection device (13) comprises:
i)- a cup-shaped body (14), slidably coupled with respect to the support in a direction parallel to the output shaft and coaxially thereto by means of at least one pair of lateral guides (16) fixed to the support; the cup-shaped body being fixed with respect to the first shaft (12);
ii)- a bushing (18), mounted inside the cup-shaped body, which is coaxial and slidable with respect thereto, the bushing being axially constrained in a fixed way to the output shaft (11) so as to move integrally therewith;
iii)- at least one pair of radial holes (20), made in a radially inner lateral surface (19) of the cup-shaped body, said lateral surface cooperating with the bushing (18);
iv)- at least one pair of opposed pegs (21), housed so that they can slide within respective radial seats (22) of the bushing, which are provided within said bushing, and until they pass through a radially outer lateral wall (23) of the bushing, the radial seats further housing first springs (24) which cooperate with the pegs, the first springs and the radial seats being configured to cause the pegs to selectively assume an extracted position, in which a first end (25) of the pegs radially projects in a cantilever fashion from the bushing to engage said radial holes (20) of the cup-shaped body and fix the cup-shaped body to the bushing, and a retracted position, in which the first end (25) of the pegs is at least partially housed in a concealed fashion in the radial seats against the action of the first springs so as not to engage the radial holes of the cup-shaped body; and
v)- second springs (26), packed between the support (10) and the cup-shaped body (14) and between the support and respective shoulder elements (27), which are fixed to the cup-shaped body and are arranged, with respect to the support, on the side opposite to the cup-shaped body;
vi)- the first ends (25) of the pegs being delimited by respective surfaces (28), arranged obliquely with respect to an axis of symmetry (A) of the output shaft and of the bushing and configured to cooperate with a perimetral edge of said radial holes (20) so as to push the pegs towards the retracted position, against the action of the first springs, as a result of any axial load applied in use to the first shaft (12) that exceeds a threshold value, so that, in the retracted position of the pegs, the bushing (18) is no longer axially constrained to the cup-shaped body and is free to translate axially with respect thereto together with the support.

2. The transmission device according to Claim 1, **characterized in that** the mechanical connection device further comprises a second shaft (29) configured to fixedly couple, on one side, to the output shaft (11) of the first component and, on the opposite side, to said bushing (18); the second shaft connecting to the bushing by means of a ball joint (30) and, preferably, by snap action.

3. The transmission device according to Claim 1 or 2, **characterized in that** said bushing (18) comprises: an annular or cup-shaped drum (31), preferably cylindrical, which has a first end (32) facing the first shaft and provided with said radial seats (22) for the pegs and for the first springs; a cover (33) for closing a second end (34) of the drum, which is opposite to the first end and is open towards the support, the cover (33) being provided with a hole (37) for receiving the output shaft through it as far as into the drum (31); and a spherical joint (35), which fixedly receives the output shaft and cooperates in contact with a first inner lateral surface (36) of the drum, the spherical joint being axially blocked inside the drum by said cover.

4. The transmission device according to Claim 3, **characterized in that** the output shaft (11) is fixedly coupled to a second shaft (29) coaxial therewith and housed within the drum, said second shaft is coupled to the spherical joint radially inside the latter by means of a ball joint (30) comprising a spherical head (38), which is made integrally of a single piece with the second shaft at a first end thereof opposite to the output shaft, and a spherical reception element (39) for receiving the spherical head, which is made integrally of a single piece with the spherical joint and extends axially in a cantilever fashion towards the first end of the drum, to which it couples in contact with a second inner lateral surface (40) of the drum by means of an outer lateral surface thereof having a spherical shape.

5. The transmission device according to any one of the preceding claims, **characterized in that** the first shaft (12) is made integrally in a single piece with the cup-shaped body (14), coaxially with respect to the output shaft, and extends axially in a cantilever fashion from a bottom wall (41) of the cup-shaped body, externally thereto and on the opposite side of said bushing; the first shaft preferably being provided, at a free end thereof, with a spherical joint coupling element (42) for coupling to the second component so as to receive loads therefrom.

6. The transmission device according to any one of the preceding claims, **characterized in that** the support (10) is provided, radially in a cantilever fashion and radially on the outside of at least one pair of first opposite lugs (43), each of which is delimited by a first face (44) facing the cup-shaped body and by a second face (45) facing on the side opposite to the cup-shaped body, the first and second faces being axially provided, in a cantilever fashion, with first pins (46) and second pins (47), respectively, which are opposite and coaxial to each other; said first and second pins (46, 47) being arranged parallel to the axis of symmetry of the output shaft and of the bushing and partially supporting in a cantilever fashion said second springs (26), which are helical springs each fitted on a respective first pin or second pin and are coupled in contact against the first and the second faces of said first lugs (43).

7. The transmission device according to Claim 6, **characterized in that** the cup-shaped body (14) is provided, at the first lugs (43) of the support (10), with second lugs (48), which face the first lugs and from which respective pairs of rectilinear longerons (49) project in a cantilever fashion, in a direction parallel to said first and second pins (46, 47) and towards the support; between each pair of said longerons there being inserted in an axially slidable way a respective radially outer end (50) of a first lug (43) provided with a respective first pin (46) and second pin (47), which are also arranged between said pair of longerons (50) together with a pair of second springs (26), which are each fitted on a first pin or second pin; said shoulder elements (27) consisting of plates, each coupled by snap action to respective free ends (51) of a pair of said longerons; said plates and said second lugs being provided, towards one another, with cantilever sleeves (52), which are coaxial with the first and second pins and inserted within which are respective ends of the second springs (26) opposite to the first lugs; said sleeves (52) being configured to cooperate with said radially outer ends (50) of the first lugs to function as axial end-of-stroke elements for the support (10) when said pegs are in the retracted position.

8. The transmission device according to any one of the preceding claims, **characterized in that** the cup-shaped body (14) is divided into two elements, which consist of an annular element (53) coupled frontally to a cup-shaped element (54) and are fixedly connected together by means of removable connection members (55), preferably screws; the cup-shaped element (54) being provided with said radial holes (20), and both the annular element and the cup-shaped element being coaxial to each other and configured to slidably receive said bushing (18) inside them.

9. The transmission device according to any one of the preceding claims, **characterized in that** it is configured to be housed within a lighting device (1) for vehicles for connecting an electric motor or actuator (7) with a reflector (4) or light source (3) so as to vary the orientation thereof; said support (10) being provided, on opposite sides of said at least one pair of lateral guides (16), with a pair of lateral pads (56) configured to support the entire transmission device within the lighting device.

10. A vehicle (1) comprising a lighting device, headlamp or rear light provided with a transmission device according to one of the preceding claims, for connecting together an electric motor or actuator (7) with a reflector (4) or light source (3) in order to vary the orientation thereof.

## Patentansprüche

1. Bewegungsübertragungsvorrichtung (8) zum Übertragen einer linearen Bewegung zwischen einem ersten Bauteil (7) und einem zweiten Bauteil (4) mit einer Kraftbegrenzerfunktion, insbesondere anwendbar auf eine Beleuchtungsvorrichtung (1) für Fahrzeuge, umfassend einen Träger (10) zur fixierten Aufnahme des ersten Bauteils, einen Ausgangsschaft (11) des ersten Bauteils, der in Bezug auf den Träger axial beweglich ist, einen ersten Schaft (12), der dafür konfiguriert ist, im Gebrauch mit dem zweiten Bauteil verbunden zu sein, und eine mechanische Verbindungsvorrichtung (13) zwischen dem axial beweglichen Ausgangsschaft und dem ersten Schaft; **dadurch gekennzeichnet, dass** die mechanische Verbindungsvorrichtung (13) umfasst:
i)- einen becherförmigen Körper (14), der bezüglich des Trägers in einer Richtung parallel zu dem Ausgangsschaft und koaxial dazu mittels wenigstens eines Paars seitlicher Führungen (16), die an dem Träger befestigt sind, verschiebbar gekoppelt ist; wobei der becherförmige Körper bezüglich des ersten Schafts (12) fixiert ist;
ii)- eine Hülse (18), die im Inneren des becherförmigen Körpers montiert ist und bezüglich desselben koaxial und verschiebbar ist, wobei die Hülse in einer fixierten Weise axial an dem Ausgangsschaft (11) gehalten wird, um sich integral mit diesem zu bewegen;
iii)- mindestens ein Paar von radialen Löchern (20), die in einer radial inneren Seitenfläche (19) des becherförmigen Körpers ausgebildet sind, wobei die Seitenfläche mit der Hülse (18) zusammenwirkt;
iv)- wenigstens ein Paar gegenüberliegender Zapfen (21), die so untergebracht sind, dass sie in entsprechenden radialen Sitzen (22) der Hülse, die innerhalb der Hülse vorgesehen sind, gleiten können bis sie durch eine radial äußere Seitenwand (23) der Hülse hindurchtreten, wobei die radialen Sitze ferner erste Federn (24) aufnehmen, die mit den Zapfen zusammenwirken, wobei die ersten Federn und die radialen Sitze dafür konfiguriert sind, die Zapfen zu veranlassen, wahlweise eine ausgefahrene Position, in der ein erstes Ende (25) der Zapfen radial in auskragender Weise von der Hülse hervorsteht, um in die radialen Löcher (20) des becherförmigen Körpers einzugreifen und den becherförmigen Körper an der Hülse zu fixieren, und eine eingefahrene Position einzunehmen, in der das erste Ende (25) der Zapfen gegen die Wirkung der ersten Federn wenigstens teilweise in verdeckter Weise in den radialen Sitzen aufgenommen ist, so dass sie nicht in die radialen Löcher des becherförmigen Körpers eingreifen; und
v)- zweite Federn (26), die zwischen dem Träger (10) und dem becherförmigen Körper (14) und zwischen dem Träger und jeweiligen Schulterelementen (27), die an dem becherförmigen Körper befestigt sind und in Bezug auf den Träger auf der dem becherförmigen Körper gegenüberliegenden Seite angeordnet sind, gepackt sind;
vi)- wobei die ersten Enden (25) der Zapfen durch jeweilige Flächen (28) begrenzt sind, die schräg in Bezug auf eine Symmetrieachse (A) des Ausgangsschafts und der Hülse angeordnet sind und dafür konfiguriert sind, mit einer Umfangskante der radialen Löcher (20) zusammenzuwirken, um die Zapfen gegen die Wirkung der ersten Federn in Richtung zu der eingefahrenen Position zu drücken, als Ergebnis jeder axialen Last, die im Gebrauch auf den ersten Schaft (12) ausgeübt wird und die einen Schwellenwert überschreitet, so dass in der eingefahrenen Position der Zapfen die Hülse (18) nicht mehr axial an dem becherförmigen Körper gehalten wird und sich bezüglich desselben zusammen mit dem Träger axial frei verschieben kann.

2. Übertragungsvorrichtung nach Anspruch 1, **dadurch gekennzeichnet, dass** die mechanische Verbindungsvorrichtung ferner einen zweiten Schaft (29) umfasst, der so konfiguriert ist, dass er an einer Seite fest mit dem Ausgangsschaft (11) des ersten Bauteils und auf der gegenüberliegenden Seite mit der Hülse (18) gekoppelt wird; wobei der zweite Schaft mittels eines Kugelgelenks (30) und vorzugsweise durch Schnappwirkung mit der Hülse verbunden ist.

3. Übertragungsvorrichtung nach Anspruch 1 oder 2, **dadurch gekennzeichnet, dass** die Hülse (18) umfasst: eine ringförmige oder becherförmige Trommel (31), vorzugsweise zylindrisch, die ein erstes Ende (32) aufweist, das dem ersten Schaft zugewandt ist und mit den radialen Sitzen (22) für die Zapfen und für die ersten Federn versehen ist; eine Abdeckung (33) zum Verschließen eines zweiten Endes (34) der Trommel, das dem ersten Ende gegenüberliegt und zu dem Träger hin offen ist, wobei die Abdeckung (33) mit einem Loch (37) zum Aufnehmen des Ausgangsschafts durch sie hindurch bis in die Trommel (31) hinein versehen ist; und ein Kugelgelenk (35), das den Ausgangsschaft fixiert aufnimmt und in Kontakt mit einer ersten inneren Seitenfläche (36) der Trommel zusammenwirkt, wobei das Kugelgelenk im Inneren der Trommel durch die Abdeckung axial blockiert ist.

4. Übertragungsvorrichtung nach Anspruch 3, **dadurch gekennzeichnet, dass** der Ausgangsschaft (11) fest mit einem zweiten Schaft (29) gekoppelt ist, der koaxial zu demselben ist und innerhalb der Trommel untergebracht ist, wobei der zweite Schaft mit dem Kugelgelenk radial innerhalb des letzteren mittels eines Kugelgelenks (30) gekoppelt ist, das einen kugelförmigen Kopf (38) umfasst, der einstückig mit dem zweiten Schaft an einem ersten Ende derselben dem Ausgangsschaft gegenüberliegend hergestellt ist, sowie ein kugelförmiges Aufnahmeelement (39) zum Aufnehmen des kugelförmigen Kopfes, das einstückig mit dem Kugelgelenk hergestellt ist und sich axial in auskragender Weise in Richtung zu dem ersten Ende der Trommel erstreckt, an das es in Kontakt mit einer zweiten inneren Seitenfläche (40) der Trommel mittels einer äußeren Seitenfläche derselben, die eine kugelförmige Form aufweist, koppelt.

5. Übertragungsvorrichtung nach einem der vorangehenden Ansprüche, **dadurch gekennzeichnet, dass** der erste Schaft (12) einstückig mit dem becherförmigen Körper (14) und koaxial bezüglich des Ausgangsschafts hergestellt ist und sich axial in auskragender Weise von einer Bodenwand (41) des becherförmigen Körpers nach außen und auf der gegenüberliegenden Seite der Hülse erstreckt; wobei der erste Schaft vorzugsweise an seinem freien Ende mit einem Kugelgelenk-Kopplungselement (42) zum Koppeln an das zweite Bauteil versehen ist, um Lasten von diesem aufzunehmen.

6. Übertragungsvorrichtung nach einem der vorangehenden Ansprüche, **dadurch gekennzeichnet, dass** der Träger (10) radial in auskragender Weise und radial außen mit wenigstens einem Paar erster gegenüberliegender Ansätze (43) versehen ist, von denen jeder durch eine erste Fläche (44), die dem becherförmigen Körper zugewandt ist, und durch eine zweite Fläche (45), die der dem becherförmigen Körper gegenüberliegenden Seite zugewandt ist, begrenzt ist, wobei die erste und die zweite Fläche axial in auskragender Weise mit ersten Stiften (46) bzw. zweiten Stiften (47) versehen sind, die einander gegenüberliegen und zueinander koaxial sind; wobei die ersten und die zweiten Stifte (46, 47) parallel zu der Symmetrieachse des Ausgangsschafts und der Hülse angeordnet sind und in auskragender Weise teilweise die zweiten Federn (26) tragen, die Schraubenfedern sind, die jeweils auf einem entsprechenden ersten Stift oder zweiten Stift sitzen, und in Kontakt mit den ersten und den zweiten Flächen der ersten Ansätze (43) gekoppelt sind.

7. Übertragungsvorrichtung nach Anspruch 6, **dadurch gekennzeichnet, dass** der becherförmige Körper (14) an den ersten Ansätzen (43) des Trägers (10) mit zweiten Ansätzen (48) versehen ist, die den ersten Ansätzen zugewandt sind und von denen jeweilige Paare von geradlinigen Längsträgern (49) in einer Richtung parallel zu den ersten und zweiten Stiften (46, 47) und in Richtung zu dem Träger in auskragender Weise hervorstehen; wobei zwischen jedem Paar der Längsträger in axial verschiebbarer Weise ein jeweiliges radial äußeres Ende (50) eines ersten Ansatzes (43) eingesetzt ist, das mit einem jeweiligen ersten Stift (46) und zweiten Stift (47) versehen ist, die ebenfalls zwischen dem Paar von Längsträgern (50) zusammen mit einem Paar von zweiten Federn (26) angeordnet sind, die jeweils auf einem ersten Stift oder zweiten Stift sitzen; wobei die Schulterelemente (27) aus Platten bestehen, die jeweils durch Schnappwirkung mit jeweiligen freien Enden (51) eines Paars der Längsträger gekoppelt sind; wobei die Platten und die zweiten Ansätze zueinander hin mit auskragenden Buchsen (52) versehen sind, die koaxial mit den ersten und zweiten Stiften sind und in die jeweilige Enden der zweiten Federn (26) gegenüberliegend den ersten Ansätzen eingesetzt sind; wobei die Hülsen (52) dafür konfiguriert sind, mit den radial äußeren Enden (50) der ersten Ansätze zusammenzuwirken, um als axiale Hubende-Elemente für den Träger (10) zu fungieren, wenn sich die Zapfen in der eingefahrenen Position befinden.

8. Übertragungsvorrichtung nach einem der vorangehenden Ansprüche, **dadurch gekennzeichnet, dass** der becherförmige Körper (14) in zwei Elemente unterteilt ist, die aus einem ringförmigen Element (53) bestehen, das stirnseitig mit einem becherförmigen Element (54) gekoppelt ist, und die mittels lösbarer Verbindungselemente (55), vorzugsweise Schrauben, fest miteinander verbunden sind; wobei das becherförmige Element (54) mit den radialen Löchern (20) versehen ist, und wobei sowohl das ringförmige Element als auch das becherförmige Element koaxial zueinander sind und dafür konfiguriert sind, die Hülse (18) verschiebbar in sich aufzunehmen.

9. Übertragungsvorrichtung nach einem der vorangehenden Ansprüche, **dadurch gekennzeichnet, dass** sie dafür konfiguriert ist, in einer Beleuchtungsvorrichtung (1) für Fahrzeuge untergebracht zu werden, um einen Elektromotor oder Aktor (7) mit einem Reflektor (4) oder einer Lichtquelle (3) zu verbinden, um somit deren Ausrichtung zu verändern; wobei der Träger (10) auf gegenüberliegenden Seiten des wenigstens einen Paares von seitlichen Führungen (16) mit einem Paar von seitlichen Kissen (56) versehen ist, die dafür konfiguriert sind, die gesamte Übertragungsvorrichtung in der Beleuchtungsvorrichtung halten.

10. Fahrzeug (1) mit einer Beleuchtungsvorrichtung, einem Scheinwerfer oder einer Rückleuchte, die bzw. der mit einer Übertragungsvorrichtung nach einem der vorangehenden Ansprüche versehen ist, um einen Elektromotor oder Aktor (7) mit einem Reflektor (4) oder einer Lichtquelle (3) zu verbinden, um deren Ausrichtung zu verändern.

## Revendications

1. Dispositif de transmission de mouvement (8) pour transmettre un mouvement linéaire entre un premier (7) et un second (4) composant avec une fonction de limiteur de force, en particulier applicable à un dispositif d'éclairage (1) pour des véhicules, comprenant un support (10) destiné à recevoir de manière fixe le premier composant, un arbre de sortie (11) du premier composant, axialement mobile vis-à-vis du support, un premier arbre (12), configuré pour être contraint en utilisation sur le second composant, et un dispositif de raccordement mécanique (13) entre l'arbre de sortie axialement mobile et le premier arbre ;
**caractérisé en ce que** le dispositif de raccordement mécanique (13) comprend :
i)- un corps en forme de gobelet (14), couplé de manière coulissante vis-à-vis du support dans une direction parallèle à l'arbre de sortie et coaxialement à celui-ci au moyen d'au moins une paire de guides latéraux (16) fixés au support ; le corps en forme de gobelet étant fixe vis-à-vis du premier arbre (12) ;
ii)- une douille (18), montée à l'intérieur du corps en forme de gobelet, qui est coaxiale et coulissante vis-à-vis de celui-ci, la douille étant contrainte axialement de manière fixe sur l'arbre de sortie (11) de façon à bouger solidairement avec celui-ci ;
iii)- au moins une paire de trous radiaux (20), pratiqués dans une surface latérale radialement interne (19) du corps en forme de gobelet, ladite surface latérale coopérant avec la douille (18) ;
iv)- au moins une paire de chevilles (21) opposées, logées de sorte à pouvoir coulisser au sein de sièges radiaux (22) respectifs de la douille, qui sont prévus au sein de ladite douille, et jusqu'à leur passage à travers une paroi latérale radialement externe (23) de la douille, les sièges radiaux logeant en outre des premiers ressorts (24) qui coopèrent avec les chevilles, les premiers ressorts et les sièges radiaux étant configurés pour amener les chevilles à adopter sélectivement une position extraite, dans laquelle une première extrémité (25) des chevilles fait saillie radialement en porte-à-faux depuis la douille pour s'engager avec lesdits trous radiaux (20) du corps en forme de gobelet et fixer le corps en forme de gobelet sur la douille, et une position rétractée, dans laquelle la première extrémité (25) des chevilles est au moins partiellement logée de manière dissimulée dans les sièges radiaux contre l'action des premiers ressorts de façon à ne pas s'engager avec les trous radiaux du corps en forme de gobelet ; et
v)- des seconds ressorts (26), placés entre le support (10) et le corps en forme de gobelet (14) et entre le support et des éléments d'épaulement (27) respectifs, qui sont fixés au corps en forme de gobelet et sont agencés, vis-à-vis du support, sur le côté opposé au corps en forme de gobelet ;
vi)- les premières extrémités (25) des chevilles étant délimitées par des surfaces (28) respectives, agencées à l'oblique vis-à-vis d'un axe de symétrie (A) de l'arbre de sortie et de la douille et configurées pour coopérer avec un bord périmétrique desdits trous radiaux (20) de façon à pousser les chevilles vers la position rétractée, contre l'action des premiers ressorts, par suite d'une quelconque charge axiale appliquée en utilisation au premier arbre (12) qui dépasse une valeur seuil, de sorte que, dans la position rétractée des chevilles, la douille (18) ne soit plus contrainte axialement sur le corps en forme de gobelet et soit libre d'effectuer une translation axiale vis-à-vis de celui-ci conjointement avec le support.

2. Dispositif de transmission selon la revendication 1, **caractérisé en ce que** le dispositif de raccordement mécanique comprend en outre un second arbre (29) configuré pour se coupler de manière fixe, sur un côté, à l'arbre de sortie (11) du premier composant et, sur le côté opposé, à ladite douille (18) ; le second arbre se raccordant à la douille au moyen d'un joint à rotule (30) et, de préférence, par une action d'emboîtement.

3. Dispositif de transmission de mouvement selon la revendication 1 ou 2, **caractérisé en ce que** ladite douille (18) comprend : un tambour annulaire ou en forme de gobelet (31), de préférence cylindrique, qui a une première extrémité (32) face au premier arbre et pourvue desdits sièges radiaux (22) pour les chevilles et pour les premiers ressorts ; un couvercle (33) pour fermer une seconde extrémité (34) du tambour, qui est opposée à la première extrémité et est ouverte vers le support, le couvercle (33) étant pourvu d'un trou (37) destiné à recevoir l'arbre de sortie à travers lui jusqu'à l'intérieur du tambour (31) ; et un joint sphérique (35), qui reçoit de manière fixe l'arbre de sortie et coopère en contact avec une première surface latérale interne (36) du tambour, le joint sphérique étant bloqué axialement à l'intérieur du tambour par ledit couvercle.

4. Dispositif de transmission selon la revendication 3, **caractérisé en ce que** l'arbre de sortie (11) est couplé de manière fixe à un second arbre (29) coaxial à celui-ci et logé au sein du tambour, ledit second arbre est couplé au joint sphérique radialement à l'intérieur de ce dernier au moyen d'un joint à rotule (30) qui comprend une tête sphérique (38), qui est constitué solidairement d'un seul tenant avec le second arbre à une première extrémité de celui-ci opposée à l'arbre de sortie, et un élément de réception sphérique (39) destiné à recevoir la tête sphérique, qui est constitué solidairement d'un seul tenant avec le joint sphérique et s'étend axialement en porte-à-faux vers la première extrémité du tambour, à laquelle il se couple en contact avec une seconde surface latérale interne (40) du tambour au moyen d'une surface latérale externe de celui-ci qui est de forme sphérique.

5. Dispositif de transmission selon l'une quelconque des revendications précédentes, **caractérisé en ce que** le premier arbre (12) est constitué solidairement d'un seul tenant avec le corps en forme de gobelet (14), coaxialement vis-à-vis de l'arbre de sortie, et s'étend axialement en porte-à-faux depuis une paroi basse (41) du corps en forme de gobelet, de manière externe à celui-ci et sur le côté opposé de ladite douille ; le premier arbre étant pourvu de préférence, à une extrémité libre de celui-ci, d'un élément de couplage à joint sphérique (42) destiné à se coupler au second composant de façon à recevoir des charges de celui-ci.

6. Dispositif de transmission selon l'une quelconque des revendications précédentes, **caractérisé en ce que** le support (10) est pourvu, radialement en porte-à-faux et radialement sur l'extérieur d'au moins une paire de premières oreilles (43) opposées, chacune d'elles étant délimitée par une première face (44) face au corps en forme de gobelet et par une seconde face (45) face au côté opposé au corps en forme de gobelet, les première et seconde faces étant pourvues axialement, en porte-à-faux, de premières goupilles (46) et de secondes goupilles (47), respectivement, qui sont opposées et coaxiales les unes aux autres ; lesdites premières et secondes goupilles (46, 47) étant agencées parallèlement à l'axe de symétrie de l'arbre de sortie et de la douille et supportant partiellement en porte-à-faux lesdits seconds ressorts (26), qui sont des ressorts hélicoïdaux ajustés chacun sur une première goupille ou une seconde goupille respective et sont couplés en contact contre les premières et secondes faces desdites premières oreilles (43).

7. Dispositif de transmission selon la revendication 6, **caractérisé en ce que** le corps en forme de gobelet (14) est pourvu, au niveau des premières oreilles (43) du support (10), de secondes oreilles (48) qui sont face aux premières oreilles et à partir desquelles des paires respectives de longerons (49) rectilignes font saillie en porte-à-faux, dans une direction parallèle auxdites premières et secondes goupilles (46, 47) et vers le support ; entre chaque paire desdits longerons étant insérée de manière axialement coulissante une extrémité radialement externe (50) respective d'une première oreille (43) pourvue d'une première goupille (46) et d'une seconde goupille (47) respectives, qui sont également agencées entre ladite paire de longerons (50) conjointement avec une paire de seconds ressorts (26), qui sont ajustés chacun sur une première goupille ou une seconde goupille ; lesdits éléments d'épaulement (27) consistant en des plaques, chacune couplée par une action d'emboîtement à des extrémités libres (51) respectives d'une paire desdits longerons ; lesdites plaques et lesdites secondes oreilles étant pourvues, les unes vers les autres, de manchons en porte-à-faux (52), qui sont coaxiaux avec les premières et secondes goupilles et dans lesquels sont insérées des extrémités respectives des seconds ressorts (26) opposées aux premières oreilles ; lesdits manchons (52) étant configurés pour coopérer avec lesdites extrémités radialement externes (50) des premières oreilles pour fonctionner comme des éléments de fin de course axiaux pour le support (10) lorsque lesdites chevilles sont dans la position rétractée.

8. Dispositif de transmission selon l'une quelconque des revendications précédentes, **caractérisé en ce que** le corps en forme de gobelet (14) est divisé en deux éléments, qui consistent en un élément annulaire (53) couplé frontalement à un élément en forme de gobelet (54) et sont raccordés de manière fixe ensemble au moyen d'organes de raccordement amovibles (55), de préférence des vis ; l'élément en forme de gobelet (54) étant pourvu desdits trous radiaux (20), et l'élément annulaire et l'élément en forme de gobelet étant tous deux coaxiaux l'un à l'autre et configurés pour recevoir de manière coulissante ladite douille (18) en leur sein.

9. Dispositif de transmission selon l'une quelconque des revendications précédentes, **caractérisé en ce qu'**il est configuré pour être logé au sein d'un dispositif d'éclairage (1) pour des véhicules destiné à raccorder un moteur ou actionneur électrique (7) à un réflecteur (4) ou une source de lumière (3) de façon à faire varier son orientation ; ledit support (10) étant pourvu, sur des côtés opposés de ladite au moins une paire de guides latéraux (16), d'une paire de patins latéraux (56) configurés pour supporter le dispositif de transmission entier au sein du dispositif d'éclairage.

10. Véhicule (1) comprenant un dispositif d'éclairage, un phare ou un feu arrière pourvu d'un dispositif de transmission selon l'une quelconque des revendications précédentes, destiné à raccorder ensemble un moteur ou actionneur électrique (7) à un réflecteur (4) ou une source de lumière (3) afin de faire varier son orientation.
